# EUROPÄISCHE PATENTANMELDUNG

(11) **EP 0 591 617 A2**
(43) Veröffentlichungstag der Anmeldung: **13.04.1994**
(21) Anmeldenummer: 93109591.3
(22) Anmeldetag: 16.06.1993
(51) Int. Cl.: F16H 3/56

(54) **Schaltbarer Zweistufentrieb mit einer Bremse**

(30) Priorität: 08.10.1992 DE 4233857
(71) Anmelder: Firma Carl Freudenberg, D-69469 Weinheim (DE)
(72) Erfinder: Eckel, Hans-Gerd, Dr., W-6947 Laudenbach (DE)

(57) **Zusammenfassung**

Schaltbarer Zweistufentrieb (1) mit einer Bremse (2), umfassend eine erste Hülse (3), die eine gedachte Zentralachse (4) umschließt, wobei die erste Hülse (3) außenumfangsseitig von einem Sonnenrad (5) drehfest umschlossen ist, das in radialer Richtung außenseitig mit zumindest einem Planetenrad (6) in Eingriff ist, wobei das Planetenrad (6) um seine eigene Rotationsachse (7) oder mit dem Sonnenrad (5) unter Vermeidung einer relativen Abrollbewegung um die Zentralachse (4) bewegbar ist, wobei das Planetenrad (6) mit einer zweiten Hülse (8) in Eingriff ist, die relativ drehbeweglich zur ersten Hülse (3) gelagert ist sowie die Zentralachse (4) umschließt und wobei die erste Hülse (3) und das Planetenrad (6) mit Außenverzahnungen versehen sind. Das Planetenrad (6) ist als Doppelzahnrad mit zwei in axialer Richtung benachbarten Zahnrädern (6.1, 6.2) ausgebildet, wobei das erste (6.1) und das zweite Zahnrad (6.2) unterschiedliche Teilkreisdurchmesser aufweisen und relativ unverdrehbar zueinander auf einer gemeinsamen Welle (9) gelagert sind. Die erste Hülse (3) steht durch das Sonnenrad (5) mit dem ersten Zahnrad (6.1) in Eingriff. Die zweite Hülse (8) ist in einem Teilbereich ihrer axialen Erstreckung mit einer Außenverzahnung versehen, wobei die Außenverzahnung mit dem zweiten Zahnrad (6.2) in Eingriff ist.

## Beschreibung

Die Erfindung betrifft einen schaltbaren Zweistufentrieb mit einer Bremse, umfassend eine erste Hülse, die eine gedachte Zentralachse umschließt, wobei die erste Hülse außenumfangsseitig von einem Sonnenrad drehfest umschlossen ist, das in radialer Richtung außenseitig mit zumindest einem Planetenrad in Eingriff ist, wobei das Planetenrad um seine eigene Rotationsachse oder mit dem Sonnenrad unter Vermeidung einer relativen Abrollbewegung um die Zentralachse bewegbar ist, wobei das Planetenrad mit einer zweiten Hülse in Eingriff ist, die relativ drehbeweglich zur ersten Hülse gelagert ist sowie die Zentralachse umschließt und wobei die erste Hülse und das Planetenrad mit Außenverzahnungen versehen sind.

Ein derartiger Zweistufentrieb ist aus der DE-OS 38 19 986 bekannt. Der Antrieb umfaßt ein Getriebehohl- und ein Riemenrad, die durch ein gemeinsames, axial zwischen dem Planetengetriebe und dem Riemenrad angeordneten Wälzlager gelagert sind. Zur Anwendung gelangt der Antrieb insbesondere für Nebenaggregate von Brennkraftmaschinen, zum Beispiel Lenkhilfpumpe, Klimakompressor und Lichtmaschine. Der Antrieb ist derart ausgelegt, daß die Leistung der Aggregate auch bei Leerlaufdrehzahl der Verbrennungskraftmaschine ausreichend ist. Im unteren Drehzahlbereich der Brennkraftmaschine können die Nebenaggregate mit hoher Leistung betrieben werden, ohne daß übermäßige Verluste in hohen Drehzahlbereichen hingenommen werden müssen. Dabei ist allerdings zu beachten, daß die Ausgestaltung des vorbekannten Zweistufentriebs in fertigungstechnischer und montagetechnischer Hinsicht wenig befriedigend ist. Es gelangt ein Getriebehohlrad zur Anwendung, das als Riemenscheibe ausgebildet ist und eine Innenverzahnung aufweist, die mit der Außenverzahnung der Planetenräder in Eingriff ist.

Der Erfindung liegt die Aufgabe zugrunde einen Zweistufentrieb der vorbekannten Art derart weiter zu entwickeln, daß die Herstellung von Innenverzahnungen vermieden werden kann. Desweiteren soll sich eine vereinfachte Lagerung der relativ zueinander beweglichen Bauteile ergeben.

Diese Aufgabe wird erfindungsgemäß mit den Merkmalen von Anspruch 1 gelöst. Auf vorteilhafte Ausgestaltungen nehmen die Unteransprüche Bezug.

Im Hinblick auf eine einfache Fertigung des Zweistufentriebs unter Vermeidung der Herstellung von Innenverzahnungen ist es vorgesehen, daß das Planetenrad als Doppelzahnrad mit zwei in axialer Richtung benachbarten Zahnrädern ausgebildet ist, daß das erste und das zweite Zahnrad unterschiedliche Teilkreisdurchmesser aufweisen und relativ unverdrehbar zueinander auf einer gemeinsamen Welle gelagert sind, daß die erste Hülse durch das Sonnenrad mit dem ersten Zahnrad in Eingriff steht, daß die zweite Hülse in einem Teilbereich ihrer axialen Erstreckung mit einer Außenverzahnung versehen ist und daß die Außenverzahnung mit dem zweiten Zahnrad in Eingriff ist. Hierbei ist von Vorteil, daß sowohl das Sonnenrad auf der ersten Hülse als auch die zweite Hülse eine Außenverzahnung aufweisen, die einfach und in wirtschaftlicher Hinsicht günstig herstellbar ist. Die beiden Außenverzahnungen von Sonnenrad und zweiter Hülse kämmen mit dem Planeten-Doppelzahnrad, dessen in axialer Richtung benachbarte Zahnräder unterschiedliche Teilkreisdurchmesser aufweisen, um eine bedarfsgerechte Anpassung der Abtriebsdrehzahl des Zweistufentriebes zu ermöglichen. Das Doppelzahnrad ist bevorzugt einstückig ausgebildet, wobei zur Gewährleistung guter Gebrauchseigenschaften während einer langen Gebrauchsdauer bevorzugt drei Doppelzahnräder in Umfangsrichtung gleichmäßig verteilt um die Zentralachse angeordnet sind.

Bevorzugt wird der erfindungsgemäße Zweistufentrieb, für Übersetzungen des Abtriebs ins Schnelle angewendet, wobei das erste Zahnrad einen größeren Teilkreisdurchmesser aufweist, als das zweite Zahnrad des Planetenrades und die erste Hülse als Abtrieb und die zweite Hülse als Antrieb ausgebildet sind. Je nachdem, in welchen Bereichen der Zweistufentrieb zur Anwendung gelangt, kann bei ansonsten gleicher Ausbildung der zur Anwendung gelangenden Verzahnungen eine Übersetzung ins Langsame erfolgen, wenn die erste Hüle als Anrieb und die zweite Hülse als Abtrieb ausgebildet sind.

Bei einer Ausbildung der zweiten Hülse als Antrieb kann diese axial außerhalb der Außenverzahnung von einer Riemenscheibe drehfest umschlossen sein. Die zweite Hülse kann beispielsweise, ebenso wie die Riemenscheibe, aus metallischem Werkstoff bestehen, wobei die Riemenscheibe auf die zweite Hülse aufgeschrumpft oder durch eine an sich bekannte, andere Wellen-Nabenverbindung auf dieser gehalten sein kann. Eine Schrumpfverbindung bietet den Vorteil geringer Abmessungen des Abtriebs in radialer Richtung.

Im Hinblick auf eine einfache Montage des Zweistufentriebs können die zweite Hülse mit ihrer Außenverzahnung und die Riemenscheibe einstückig ineinander übergehend ausgebildet sein.

Das Planetenrad sollte bevorzugt aus polymerem Werkstoff bestehen. Dies führ zu vergleichsmäßigten Traganteilen der drei Plantenräder und stellt in der Regel eine geräuscharme Lösung dar.

Gemäß einer vorteilhaften Ausgestaltung ist es vorgesehen, daß die zweite Hülse die erste Hülse mit radialem Abstand umschließt und daß die Hülsen durch zumindest ein Wälzlager innerhalb des Abstandes aufeinander abgestützt sind und daß zwischen den Hülsen ein Freilauf angeordnet ist. Bevorzugt gelangen zumindest zwei Wälzlager zur Anwendung, die einander in axialer Richtung mit Abstand benachbart zugeordnet sind, wobei im Bereich der Riemenscheibe bevorzugt ein Rollenlager und im Bereich der Verzahnung von zweiter Hülse und zweitem Zahnrad ein Rillenkugellager verwendet wird. Diese Ausgestaltung bedingt eine breite Abstützung und eine exakte Positio-2nierung der zur Anwendung gelangenden Bauteile, die relativ zueinander beweglich sind.

Eine weitere Verringerung der Einzelteile ist dadurch zu erzielen, daß die Außenumfangsfläche der ersten Hülse und die Innenumfangsfläche der zweiten Hülse als Laufflächen für die Wälzkörper ausgebildet sind. Außerdem läßt sich durch diese Ausgestaltung eine geringe radiale Ausdehnung des Zweistufentriebs im Bereich des Abtriebs erzielen und somit eine verbesserte Anpassung der Übersetzung an den jeweiligen Anwendungsfall.

Zur Verringerung der Abmessungen des Zweistufentriebs in axialer Richtung und einer Verringerung der beweglichen Massen kann die erste Hülse auf der dem zweiten Zahnrad des Planetenrades abgewandten Seite des ersten Zahnrades und die zweite Hülse auf der dem ersten Zahnrad abgewandten Seite des zweiten Zahnrades von jeweils einer relativ drehfesten Wälzscheibe umschlossen sein, wobei die Wälzscheiben auf der dem Planetenrad zugewandten Seite von Gegenwälzscheiben anliegend berührt werden, die die Welle des Planetenrades relativ drehfest umschließen. Die Wälzscheiben und die Gegenwälzscheiben weisen einen Abrolldurchmesser auf, der dem Teilkreisdurchmesser der jeweils in axialer Richtung angrenzenden Zahnräder entspricht. Neben der geringen Masse der Wälzscheiben, die eine rasche Anpassung der Drehzahlen im Anschluß an den Schaltvorgang begünstigt und der geringen Ausdehnung in axialer Richtung, bewirkt diese Ausgestaltung der Durchmesser der Wälzscheiben nur eine Abrollbewegung derselben aufeinander, so daß abrasiver Verschleiß zuverlässig vermieden wird und der Zweistufentrieb wartungsfrei während einer langen Gebrauchsdauer betrieben werden kann.

Das Planetenrad und das Gehäuse können durch einen Anlaufbund an der Wälzscheibe in axialer Richtung geführt sein, wobei der Anlaufbund zwischen dem Planetenrad und Gegenwälzscheibe eintaucht. Durch diese Ausgestaltung ist eine exakte Zuordnung der zueinander beweglichen Bauteile in axialer Richtung gewährleistet und die Abmessungen in axialer Richtung können dadurch auf ein Minimum reduziert werden.

Das Planetenrad ist von einem Gehäuse umschlossen, das drehfest mit dem relativ beweglichen Bestandteil der Bremse verbunden ist, wobei das Gehäuse auf der Welle des Planetenrades gelagert und durch die Wälzscheiben auf den Hülsen abgestützt ist. Hierbei ist von Vorteil, daß die Lagerung der Doppelplaneten gleichzeitig die Lagerung des Gehäuses übernehmen. Diese Ausgestaltung bedingt einen teilearmen und einfachen Aufbau und geringe Abmessungen des Zweistufentriebs. Das Gehäuse kann einen im wesentlichen U-förmigen Querschnitt aufweisen.

Die Bremse zum Umschalten des Zweistufentriebs ist bevorzugt elektromagnetisch betätigbar. Die Kraftaufbaugeschwindigkeit ist bei einer derartigen Ausführung besonders kurz, was einer präzisen Schaltbarkeit zugute kommt.

Der erfindungsgemäße Zweistufenantrieb kann in verschiedenen Bereichen zur Anwendung gelangen, bevorzugt jedoch als Antrieb für Nebenaggregate von Verbrennungskraftmaschinen in Kraftfahrzeugen.

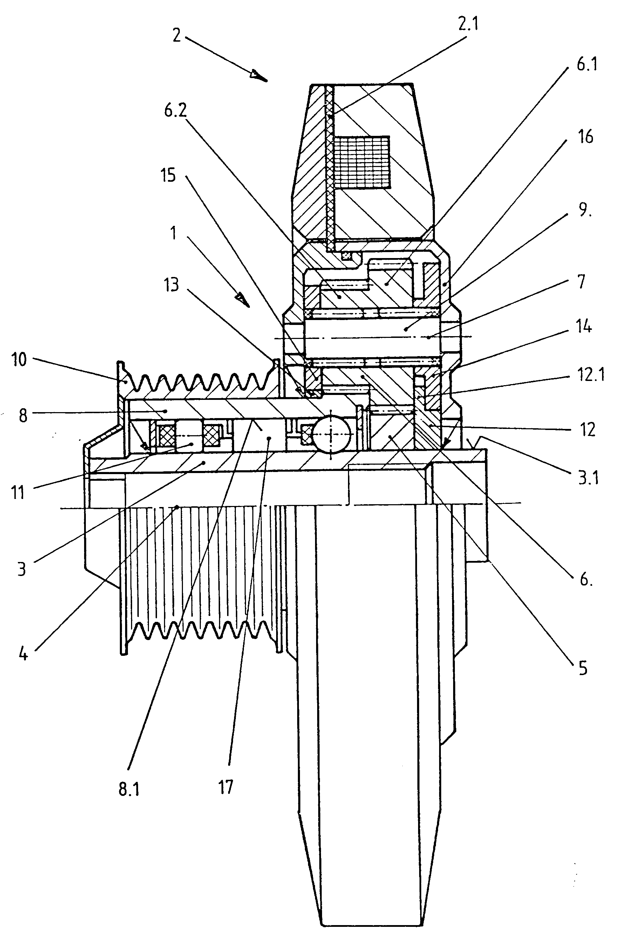

Ein Ausführungsbeispiel eines schaltbaren Zweistufentriebs ist in der beigefügten Zeichnung schematisch und in halbgeschnittener Darstellung gezeigt und wird im folgenden näher beschrieben.

In der Zeichnung ist ein schaltbarer Zweistufentrieb 1 mit einer Bremse 2 gezeigt, der im wesentlichen aus einer ersten Hülse 3 und einer zweiten Hülse 8 besteht, die eine gedachte Zentralachse 4 umschließen. Der in diesem Ausführungsbeispiel gezeigte Zweistufentrieb 1 gelangt als Antrieb für Nebenaggregate von Verbrennungskraftmaschinen in Kraftfahrzeugen zur Anwendung und bewirkt bei geschlossener Bremse 2 eine Übersetzung der Abtriebs ins Schnelle. Der Abtrieb des Zweistufentriebs erfolgt über die innere Hülse 3, auf der ein Sonnenrad 5 drehfest angeordnet ist. Das Sonnenrad 5 ist mit dem ersten Zahnrad 6.1 des Planetenrades 6 in Eingriff, wobei in diesem Ausführungsbeispiel drei in Umfangsrichtung gleichmäßig verteilte Planetenräder vorgesehen sind, die mit ihren Wellen 9 in Ausnehmungen des Gehäuses 16 gelagert sind. Die Zahnräder 6.1, 6.2 der Planetenräder 6 sind einstückig ineinander übergehend ausgebildet und weisen unterschiedliche Teilkreisdurchmesser auf. Das zweite Zahnrad 6.2 kämmt mit seiner Außenverzahnung in der Außenverzahnung der zweiten Hülse 8, die sich umfangsseitig über einen axialen Teilbereich der Hülse erstreckt. Die zweite Hülse 8 ist drehfest mit einem Antrieb in Form einer Riemenscheibe 10 verbunden. Der Zweistufentrieb kann beispielsweise als Antrieb für eine hier nicht dargestellte Lichtmaschine genutzt werden kann. Die äußere Hülse 8 umschließt die innere Hülse 3 umfangsseitig, wobei die Außenumfangsfläche 3.1 der ersten Hülse 3 und die Innenumfangsfläche 8.1 der zweiten Hülse 8 als Laufflächen für die Wälzkörper der Wälzlager 11 ausgebildet sind.

Die Abstützung der Planetenräder 6 sowie die Abstützung des Gehäuses 16, in dem die Planetenräder 6 gelagert sind, erfolgt über Wälzscheiben 12, 13 und Gegenwälzscheiben 14, 15. Die Wälzscheiben 12, 13 umschließen die erste und die zweite Hülse 3, 8 umfangsseitig, wobei die Gegenwälzscheiben 14, 15 auf der Welle 9 der Planetenräder 6 angeordnet sind. Die Wälzscheiben und die Gegenwälzscheiben 12, 13, 14, 15 weisen jeweils einen Teilkreisdurchmesser auf, wie die in axialer Richtung angrenzenden Verzahnungen. Dadurch wird gewährleistet, daß eine reibungsbehaftete Relativbewegung von Wälzscheiben und Gegenwälzscheiben aufeinander vermieden wird und die relativ beweglichen Teile aufeinander abrollen.

Die Bremse 2, die elektromagnetisch betätigbar ist, besteht aus einem ortsfesten, relativ unbeweglichen Teilbereich und aus einem drehbeweglichen Bestandteil 2.1, der drehfest mit dem Gehäuse 16 des Zweistufentriebs 1 verbunden ist. Zur Montage der Planetenräder 6 ist das Gehäuse 16 zweiteilig ausgeführt.

Zur Funktion wird folgendes ausgeführt:
Ein schaltbarer Zweistufentrieb 1 mit einer Bremse 2 wird bevorzugt zur bedarfsgerechten Anpassung der Drehzahl von Nebenaggregaten in Kraftfahrzeugen verwendet. Der Übergang von der ersten in die zweite Schaltstufe erfolgt über die Betätigung der schaltbaren Bremse 2. Bei niedrigen Motordrehzahlen, beispielsweise im Leerlauf oder beim Rangieren auf Parkplätzen, ist es sinnvoll, durch einen Zweistufentrieb die Drehzahl der Nebenaggregate, beispielsweise einer Lichtmaschine, in einen wesentlich leistungsstärkeren Drehzahlbereich anzuheben. Im oberen Drehzahlbereich der Verbrennungskraftmaschine, beispielsweise im Volllastbereich auf Autobahnen bedarf es hingegen keiner Drehzahlanhebung, was durch ein Umschalten in den 1:1 Bereich gewährleistet ist.

Durch die kleinere Drehzahldifferenz zwischen maximal und minimal Drehzahl der Nebenaggregate können diese in Bereichen höherer Wirkungsgrade betrieben werden und durch die annähernd gleichen Betriebsdrehzahlen hinsichtlich ihrer Auslegung besser optimiert werden.

Bis zum Erreichen einer Grenz-Motordrehzahl ist die Bremse 2 strombeaufschlagt und somit geschlossen. Eine Übersetzung der Abtriebsdrehzahl der inneren Hülse 3 erfolgt ins Schnelle. Die geschlossene Bremse 2 verhindert eine Rotation des Gehäuses 16 und der darin gelagerten Planetenräder 6 um die Zentralachse 4, so daß der Kraftfluß von der Riemenscheibe 10 über die äußere Hülse 8 auf das Planetenrad 6 und über das Sonnenrad 5 zur inneren Hülse 3 erfolgt. In Abhängigkeit von dem jeweiligen Übersetzungsverhältnis kann die gewünschte Drehzahl des Abtriebs eingestellt werden.

Oberhalb der Grenz-Motordrehzahl wird die Bremse stromlos geschaltet und somit geöffnet. In diesem Betriebszustand, der beispielsweise oberhalb von 1 500 U/min der Verbrennungskraftmaschine vorliegen kann, weisen der Abtrieb der inneren Hülse 3 und der Antrieb der äußeren Hülse 8 über die Riemenscheibe 10 die gleichen Drehzahlen um die Zentralachse 4 auf. Die Planetenräder 6 sind mit dem um die Zentralachse 4 rotierenden Sonnenrad 5 in Eingriff, ohne daß die Planetenräder 6 um ihre eigene Rotationsachse 7 rotieren. In diesem Betriebszustand übernimmt der Freilauf 17 die Kraftfluß- und Momentenübertragung.

In diesem Betriebszustand verfügen die Nebenaggregate durch die vergleichsweise hohe Motordrehzahl über ein ausreichend hohes Leistungsvermögen, so daß es einer Anhebung ihrer Drehzahl nicht bedarf. Darüberhinaus besteht die Möglichkeit durch eine kleinere Grundübersetzung (Verhältnis der Riemenscheibendurchmesser auf Kurbelwelle und Negenaggregat) die Drehzahl des Nebenaggregats abzusenken.

## Patentansprüche

1. Schaltbarer Zweistufentrieb mit einer Bremse, umfassend eine erste Hülse, die eine gedachte Zentralachse umschließt, wobei die erste Hülse außenumfangsseitig von einem Sonnenrad drehfest umschlossen ist, das in radialer Richtung außenseitig mit zumindest einem Planetenrad in Eingriff ist, wobei das Planetenrad um seine eigene Rotationsachse oder mit dem Sonnenrad unter Vermeidung einer relativen Abrollbewegung um die Zentralachse bewegbar ist, wobei das Planetenrad mit einer zweiten Hülse in Eingriff ist, die relativ drehbeweglich zur ersten Hülse gelagert ist sowie die Zentralachse umschließt und wobei die erste Hülse und das Planetenrad mit Außenverzahnungen versehen sind, dadurch gekennzeichnet, daß das Planetenrad (6) als Doppelzahnrad mit zwei in axialer Richtung benachbarten Zahnrädern (6.1, 6.2) ausgebildet ist, daß das erste (6.1) und das zweite Zahnrad (6.2) unterschiedliche Teilkreisdurchmesser aufweisen und relativ unverdrehbar zueinander auf einer gemeinsamen Welle (9) gelagert sind, daß die erste Hülse (3) durch das Sonnenrad (5) mit dem ersten Zahnrad (6.1) in Eingriff steht, daß die zweite Hülse (8) in einem Teilbereich ihrer axialen Erstreckung mit einer Außenverzahnung versehen ist und daß die Außenverzahnung mit dem zweiten Zahnrad (6.2) in Eingriff ist.

2. Zweistufentrieb nach Anspruch 1, dadurch gekennzeichnet, daß die erste Hülse (3) als Abtrieb und die zweite Hülse (8) als Antrieb ausgebildet sind.

3. Zweistufentrieb nach Anspruch 1 bis 2, dadurch gekennzeichnet, daß die zweite Hülse (8) von einer Riemenscheibe (10) drehfest umschlossen ist.

4. Zweistufentrieb nach Anspruch 1 bis 3, dadurch gekennzeichnet, daß die zweite Hülse (8) die erste Hülse (3) mit radialem Abstand umschließt und daß zwischen den Hülsen (3, 8) eine Freilauf (17) angeordnet ist.

5. Zweistufentrieb nach Anspruch 1 bis 4, dadurch gekennzeichnet, daß die erste Hülse (3) eine Außenumfangsfläche (3.1) und die zweite Hülse (8) eine Innenumfangsfläche (8.1) aufweisen, die als Laufflächen für die Wälzkörper ausgebildet sind.

6. Zweistufentrieb nach Anspruch 1 bis 5, dadurch gekennzeichnet, daß die erste Hülse (3) auf der dem zweiten Zahnrad (6.2) des Planetenrades (6) abgewandten Seite des ersten Zahnrades (6.1) und die zweite Hülse (8) auf der dem ersten Zahnrad (6.1) abgewandten Seite des zweiten Zahnrades (6.2) von jeweils einer relativ drehfesten Wälzscheibe (12, 13) umschlossen sind und daß die Wälzscheiben (12, 13) auf der dem Planetenrad (6) zugewandten Seite von Gegenwälzscheiben (14, 15) anliegend berührt werden, die die Welle (9) des Planetenrades (6) relativ drehfest umschließen und daß die Wälzscheiben (12, 13) und die Gegenwälzscheiben (14, 15) jeweils einen Abrolldurchmesser aufweisen, der dem Teilkreisdurchmesser der jeweils in axialer Richtung angrenzenden Zahnräder (5, 8, 6.1, 6.2) entspricht.

7. Zweistufentrieb nach Anspruch 5, dadurch gekennzeichnet, daß das Planetenrad (6) und das Gehäuse (16) durch einen Anlaufbund (12.1) an der Wälzscheibe (12) in axialer Richtung geführt sind und daß der Anlaufbund (12.1) in axialer Richtung zwischen dem Planetenrad (6) und der Gegenwälzscheibe (14) eintaucht.

8. Zweistufentrieb nach Anspruch 6 bis 7, dadurch gekennzeichnet, daß das Planetenrad (6) von einem Gehäuse (16) umschlossen ist, das drehfest mit dem relativ beweglichen Bestandteil (2.1) der Bremse (2) verbunden ist und daß das Gehäuse (16) auf der Welle (9) des Planetenrades (6) gelagert und durch die Wälz- und Gegenwälzscheiben (12, 13, 14, 15) auf den Hülsen (3, 8) abgestützt ist.

9. Zweistufentrieb nach Anspruch 1 und 8, dadurch gekennzeichnet, daß die Bremse (2) elektromagnetisch betätigbar ist.

10. Zweistufentrieb nach Anspruch 1 bis 9, gekennzeichnet durch die Verwendung als Antrieb für Nebenaggregate von Verbrennungskraftmaschinen in Kraftfahrzeugen.
